# EUROPEAN PATENT SPECIFICATION

(11) **EP 4 250 284 B1**
(45) Date of publication and mention of the grant of the patent: **06.05.2026**
(21) Application number: 22163345.6
(22) Date of filing: 21.03.2022
(51) Int. Cl.: G10K 11/178, B06B 1/02, B06B 1/06, B64C 1/40, B64C 1/06

(54) **ACTIVE NOISE CONTROL SYSTEM FOR AN AIRCRAFT**
AKTIVES GERÄUSCHKONTROLLSYSTEM FÜR EIN FLUGZEUG
SYSTÈME DE COMMANDE DE BRUIT ACTIF POUR UN AÉRONEF

(43) Date of publication of application: 27.09.2023
(73) Proprietor: Airbus SAS, 31707 Blagnac (FR); Airbus Operations GmbH, 21129 Hamburg (DE)
(72) Inventor: WANDEL, Martin, 21129 Hamburg (DE); THOMAS, Christian, 21129 Hamburg (DE); MACHUNZE, Wolfgang, 82024 Taufkirchen (DE); Friedberger, Alois, 82024 Taufkirchen (DE)
(74) Representative: LKGLOBAL Partnerschaftsgesellschaft mbB

(56) References cited:
- US-A1- 2010 252 677
- US-A1- 2020 227 020
- US-A1- 2021 195 335
- GARDONIO P: "REVIEW OF ACTIVE TECHNIQUES FOR AEROSPACE VIBRO-ACOUSTIC CONTROL", JOURNAL OF AIRCRAFT, AIAA - AMERICAN INSTITUTE OF AERONAUTICS AND ASTRONAUTICS, INC, US, vol. 39, no. 2, 1 March 2002 (2002-03-01), pages 206 - 214, XP001102152, ISSN: 0021-8669
- ELLIOTT STEPHEN J ET AL: "Active vibroacoustic control with multiple local feedback loops", THE JOURNAL OF THE ACOUSTICAL SOCIETY OF AMERICA, AMERICAN INSTITUTE OF PHYSICS, 2 HUNTINGTON QUADRANGLE, MELVILLE, NY 11747, vol. 111, no. 2, 1 February 2002 (2002-02-01), pages 908 - 915, XP012002766, ISSN: 0001-4966, DOI: 10.1121/1.1433810
- YANG XIAOPENG ET AL: "Review of flexible microelectromechanical system sensors and devices", PRECIS. ENG. NANO. PREC. ENG, 27 April 2021 (2021-04-27), pages 25001 - 25001, XP055953244, Retrieved from the Internet <URL:https://aip.scitation.org/doi/pdf/10.1063/10.0004301> [retrieved on 20220819]

## Description

### TECHNICAL FIELD

The present disclosure relates to active noise control systems in general, and in particular to active noise control system for aircraft applications as well as an aircraft with such an active noise control system.

### TECHNICAL BACKGROUND

Oftentimes, acoustic noise is undesired. For example, in aircraft cabins, vibrations of the fuselage of the aircraft and of interior components lead to disturbing noise within the cabin. Such vibrations may for example result from the operation of the turbines or propellers or from drag forces exerted onto the aircraft during flight, and are mechanically propagated to the cabin, where they produce acoustic noise that may be unpleasant for passengers and crew. Active noise control or noise cancellation systems are in principle known in the art. Such systems usually utilize microphones and loudspeakers, where the microphones measure the sounds or rather the noise to be canceled. The loudspeakers are then commanded to create counter sounds which are, for example, opposite in phase to the noise to be cancelled. These noise control system are, e.g., known for headphones. In aircraft applications, in order to implement such systems, currently relatively large actuators (such as loudspeakers) and sensors (such as microphones) are used which are distributed in regions of the aircraft, where noise cancellation is desirable. These components, as well as the harnesses used to connect them, are relatively large and heavyweight. Therefore, in order to meet the weight requirements, only a relatively small amount of such actuators and sensors can be used.

US 2020 / 227 020 A1 describes an acoustic element including a nanovoided polymer layer having a first nanovoid topology in an unactuated state and a second nanovoid topology different than the first nanovoid topology in an actuated state. Capacitive actuation of the nanovoided polymer layer, for instance, can be used to reversibly control the size and shape of the nanovoids within the polymer layer and hence tune its sound damping characteristics or sound transduction behavior, e.g., during operation of the acoustic element. An acoustic element may be configured for passive or active sound attenuation.

US 2021 / 195 335 A1 describes an audio system including at least one sound generation device having at least an acoustic transducer; and an electronic integrated circuit. A communication bus is connected to the at least one sound generation device and is configured to communicate a digital signal comprised of one or more audio streams and control signals. A power bus is connected to the at least one sound generation device. The acoustic transducer includes at least one of the following groups: a membrane and an acoustic modulator; or a membrane, acoustic resonator, and acoustic coupler. The electronic integrated circuit is constructed and arranged to receive the digital signal and generate an analog electric signal to operate the acoustic transducer to generate an audio signal in accordance with the control signal.

Gardonio P: "Review of active techniques for aerospace vibro-acoustic control", Journal of Aircraft, AIAA- American Institute of Aeronautics and Astronautics, Inc, US, vol. 39, no. 2, 1 March 2002, pages 206-214, XP001102152, ISSN: 0021-8669 presents a review of active techniques for aerospace vibro-acoustic control. The mechanisms of airborne or structure-borne sound generation and transmission in aerospace vehicles are briefly reviewed. The main approaches of passive and active noise/vibration control are summarised, and three examples of active systems that have already been developed into practical aerospace applications are briefly described. The actuator, sensor, and control system requirements for aerospace applications are discussed.

Yang Xiaopeng ET AL: "Review of flexible microelectromechanical system sensors and devices", Precis. Eng. Nano. Prec. Eng, 27 April 2021 (2021-04-27), pages 25001-25001, XP055953244 describes that, today, the vast majority of microelectromechanical system (MEMS) sensors are mechanically rigid and therefore suffer from disadvantages when used in intimately wearable or bio-integrated applications. By applying new engineering strategies, mechanically bendable and stretchable MEMS devices have been successfully demonstrated. The article reviews recent progress in this area, focusing on high-performance flexible devices based on inorganic thin films. The common design and fabrication strategies for flexibility and stretchability are addressed and the recent application-oriented flexible devices are summarized.

US 2010 / 252 677 A1 describes an aircraft that includes a cabin in which at least part of the space is demarcated by trim panels and the cabin is provided with a system for the active control of ambient noise. Each trim panel is either an active panel including actuators powered by the active noise control system or a passive panel without such actuators. In addition, the trim panels of the cabin of the one type, either active or passive, are mechanically interchangeable with a panel of the other type, either passive or active, respectively. Power supply wiring for active panels is installed in the aircraft, this wiring being capable of powering all active panels which could be installed, whether said active panels are actually installed or whether interchangeable passive panels are installed. Finally, a power supply system for the active panels is installed in the aircraft and connected to the power supply wiring of the active panels.

### DESCRIPTION

It is an objective to provide a lightweight and easy to maintain active noise control system.

This objective is solved by the subject matter of the independent claim 1. Further embodiments are described in the dependent claims as well as in the following description.

In general, undesired noise in an aircraft cabin may result from vibrations or oscillations either of the fuselage itself or of components within the cabin. By using certain sensors, either the vibrations itself or the resulting noise may be determined. Analyzing these data allows to create counteracting noise components, either by directly mechanically exciting the component generating the noise or by creating corresponding sound waves, e.g., by way of acoustically active components such as loudspeakers. These counteracting noise components may destructively interfere with the original noise component, thereby eliminating or at least damping the noise. Within an aircraft, the noise profile may differ from location to location. For example, in passenger aircrafts, the noise profile will vary at regions close to turbines or propellers with regard to more distant regions such as the front or rear of the aircraft. In order to account for this, a large number of sensor or actuators is necessary.

The disclosed active noise controls system allows for the utilization of many relatively small and lightweight actuators and sensor, such as miniaturized loudspeakers and microphones or vibration sensors and actuators. Additionally, heavyweight harnesses can be avoided. On the one hand, this allows for flexible adaption to different regions within the cabin. On the other hand, the system further may be easily maintained, e.g., if certain components need to be replaced. These advantages are, in particular, achieved by using a foil having all the necessary devices (in the form of miniaturized devices) and components mounted thereon or integrated into it.

The foil of the disclosed system may be any foil suitable to print or otherwise create electronic circuits on it, such as on a circuit board. In particular, the foil may be a flexible foil, so that it can be adapted to different surrounding shapes. This allows the foil to be applied to flat surfaces as well as to curved surfaces such as the inner wall of the fuselage itself. Additionally, the foil may have interconnection points, e.g., at edge areas, which allow the foil to be connected to a second foil. In this way, a large structure or surface to be covered by the active noise control system may be separated into different partial foils, allowing for easy replacement of component of the active noise control system when, e.g., a critical number of devices on the foil, such as the actuators, sensors or driver devices, as described below, need to be replaced. In this way, the corresponding foil segment may be replaced without having to replace the complete foil. The foil may be attached to interior elements of the aircraft cabin. For example, the foil may be attached to floor or ceiling panels or to any other surface within the aircraft cabin. Further, the foil may have power connectors connected to some of the conductive tracks which serve to deliver electrical power to the driver arrangement.

The conductive tracks may be similar to conductive tracks of a circuit board and allow different components on the foil to be connected with each other. In particular, the conductive tracks may replace conventional harnesses such as regular cables or wires, thereby reducing weight. The conductive tracks may build an electronic network between single components such as the actuators, the sensors, and the driver arrangement.

The sensors are configured to, either directly or indirectly, measure a noise profile within the cabin at the region where the specific sensor is located. Thereby, direct measurement refers to measuring vibrations of the specific component onto which the foil is applied. This method is referred to as direct measurement because these vibrations can be the source of undesired noise. Such direct measurement sensors may, for example, be mechanical vibration sensors such as piezo devices or any other small vibration sensor, that can be applied to a circuit foil. The vibration sensors thereby measure vibrations which are propagated from the structure, onto which the foil is mounted, to the foil. Indirect measurement refers to measuring the noise itself, after it has been created. Such sensors may, for example, be miniaturized microphones, such as MEMS-devices or CMUTs, as described below. However, any other small sound sensor may be utilized that can be integrated into a circuit on the foil. The sensors are distributed over the foil at locations, where noise measurement is desired or useful. These sensor are connected to the driver arrangement and send corresponding measurement signals to the driver arrangement.

According to the invention, the driver arrangement is an arrangement of one or more driver devices, which are distributed over the foil, such that individual ones of the driver devices are responsible for a defined subset of the sensors and of the actuators. By way of example, one driver device of the driver arrangement may be assigned to eight sensors and eight actuators. In particular, according to the invention, an individual driver device serves sensors and actuators close to the driver device. However, an individual one of the driver devices may also serve any other number of sensors and actuators on any location at the foil, depending on the capabilities of the individual driver device.

The individual driver devices may, for example, be integrated microchip components configured to perform certain analysis algorithms on the measurement signals from the sensor. However, in a non-claimed embodiment, instead of integrated microchip components that are on the foil, it is, e.g., also conceivable that all or some of the sensors and/or actuators communicate with an external computing device (such as with a computer in the aircraft cockpit) via the conductive tracks and an additional wiring. In such instances, the external computing device performs the functionalities of the driver arrangement. The driver devices may be configured to extract certain frequency components of the measurement signals and to generate corresponding control signals for the actuators. These control signals may be designed to command the actuators to generate vibrations and/or sounds (depending on the type of actuator) that counteract the measured noise or frequency components of interest in the noise. This may be achieved by commanding the actuators to generate vibrations and/or sounds that interfere destructively with the vibrations and/or sound measured by the sensors (the vibrations and/or sound that are to be cancelled), i.e., by commanding inversely phased signals.

Each of the plurality of actuators receives the control signals from an associated driver device of the driver arrangement via associated conductive tracks. The actuators may, for example, be miniaturized loudspeaker (such as MEMS-devices like CMUTs) or mechanical actuator (such as piezo elements) or any other small actuator device that may be placed onto or integrated into the foil and connected to the conductive tracks. In particular, the actuators may be the same or similar to the sensors but work in the opposite direction.

By using many sensors and actuators that are distributed over the foil, the power required for cancelling the noise may be easily achieved without the need for large vibration and/or sound devices. Further, by using a foil having many sensors and actuators thereon, easy adjustment to the noise profiles at different locations is possible.

According to an embodiment, at least one of the plurality of actuators and/or at least one of the plurality of sensors is a micro electro-mechanical system device (MEMS-device).

Such MEMS-devices are microscopic components having moving parts. MEMS-devices may be made up of components between 1 and 100 micrometers in size and the MEMS devices itself range in size from 20 micrometers to one millimeter. Such devices may be used to generate sound as well as to sense sound. In general, acoustic MEMS-devices comprise a flexible membrane which may be actuated, for example, electrostatically or piezoelectrically. Such MEMS-devices may, for example, be CMUTs, as described below. However, any other suitable MEMS-device may be used, too.

Such MEMS-devices may be integrated in large numbers (e.g., in the order of several thousands) on foils or foil strips, such as the foil used in the active noise control system. Therefore, although a single MEMS-device has a relatively small power, using many of them allows for them to be used for noise cancellation for large volumes such as aircraft cabins.

According to a further embodiment, at least one of the plurality of actuators and/or at least one of the plurality of sensors is a capacitive micromachined ultrasonic transducer (CMUT).

CMUT are a subtype of MEMS-device for sound detection and generation. Such CMUTs can be extremely miniaturized and may also be used for low frequencies. From a sustainability point of view, they are favorable over, for example, lead zirconate titanate piezo elements (PZT elements). CMUTs are in principle known in the art. Therefore, their functionality will not be described in great detail. However, usually CMUTs are operated having an alternating voltage between a metal contact on top of a flexible membrane and a counter electrode below. These electrodes together build a capacitance. CMUTs may either be used as sensor or as actuator or as both.

In the reception mode, i.e., when used as a sensor or microphone, CMUTs are operated according to the principle of a condenser microphone. The sound wave causes the flexible membrane to vibrate mechanically. The resulting change in capacitance generates an alternating current between the electrodes via a bias voltage, which is converted to an alternating voltage by a current-voltage converter. This voltage can be further processed with a commercially available ultrasonic testing device.

In transmission mode, i.e., when the CMUT is used as an actuator or loudspeaker, the membrane is deflected by an AC voltage that generates an electrostatic force between the capacitor plates (the counter electrode and the metal contact on top of the flexible membrane). For this purpose, the transmission pulse of a driver device, which causes the plate to vibrate at the resonant frequency of the electromechanical structure, can be switched directly to the CMUT. By applying a DC voltage, the flexible plate can also be deflected statically and thus a defined operating point can be set.

According to a further embodiment, at least one of the plurality of actuators is a loudspeaker.

For example, a CMUT or other MEMS-device may be used as such a loudspeaker. However, any other suitable loudspeaker device may be used. Further, such a loudspeaker may also be built by an integrated structure of the foil, as described further below. In particular, the term "loudspeaker", when used herein, refers to any device or structure capable of generating sound waves.

According to a further embodiment, at least one of the plurality of sensors is a microphone.

Similar to the loudspeakers, such a microphone may be a CMUT or other MEMS-device or any other suitable microphone device. Further, such a microphone may also be built by an integrated structure of the foil, as described further below. The term "microphone", when used herein, therefore refers to any device or structure capable of sensing sound waves. In this regard, loudspeakers are used in embodiments where the noise profile is measured indirectly by measuring the noise after it has been created by the vibrations of the cabin component onto which the active noise control system is mounted.

Further, an actuator may act as both, loudspeaker and microphone, simultaneously, and a sensor may act as both, microphone and loudspeaker, simultaneously.

According to a further embodiment, at least one of the plurality of actuators and/or at least one of the plurality of sensors is a piezo electric element.

Such piezo electric elements may directly measure vibrations within the structure onto which the foil is mounted when used as a sensor. For this, the piezo electric element may utilize the piezo electric effect to create electric signals in response to mechanical strain coupled into the piezo electric element by the structure, such as a cabin floor panel, ceiling panel, fuselage, or wall panel.

When used as an actuator, the command signal is an electrical signal comprising a signal shape suitable to cancel the noise measured by the sensors. For example, the control signal may be the same signal as the measurement signal but shifted 180 degree in phase (and possibly scaled appropriately). When this signal is coupled into the piezo electric element, the piezo electric element internally generates mechanical strain, i.e., vibrations, because of the reverse piezo electric effect. These vibrations are coupled into the foil and therefore into the component (such as a floor panel, ceiling panel, fuselage, wall panel) onto which the active noise control system is mounted, thereby destructively interfering with the vibrations generating the undesired noise.

Although, as described above, MEMS-device such as CMUTs are favorable from a sustainability point of view, when high power is required, using piezo electric elements may be necessary.

According to a further embodiment, the piezo electric element is made from an inorganic compound comprising lead zirconate titanate.

According to a further embodiment, at least one of the plurality of actuators and/or at least one of the plurality of sensors is formed by a rigid bottom film having a first metal layer and a top film having at least one second metal layer. The bottom film is arranged directly on the foil. The top film is spaced apart from the bottom film by a plurality of spacers. The top film is designed to vibrate and thereby generate the vibrations and/or acoustic sounds. Each of the at least one second metal layer together with the first metal layer builds a capacitor.

Instead (or additionally) to using devices such as MEMS-device in general, CMUTs or piezo electric elements, the corresponding functionalities may be integrated into the foil itself. Such a solution may either be implemented on the whole foil or only at some regions of the foil.

The rigid bottom film may be fixedly connected to the foil. In this regard, the rigid bottom film may be rigid in the sense that it is not movable with regard to the foil. The first metal layer builds a first electrode on the rigid bottom film. The top film is spaced from the bottom film by the spacers such that between two spacers, a cavity is built between the bottom film and the top film.

The at least one second metal layer is connected to the top film. For example, if more than one second metal layer is used, a first one of the at least one second metal layer may be located on the top film such that it only spans some of the cavities built between the bottom film and the top film. A second one of the at least one second metal layer may be located on the top film such that it only spans some of the remaining cavities, and so on. Therefore, each of the at least one second metal layer together with the first metal layer builds a capacitor, wherein the bottom electrode (first metal layer) is fixed in space while the second electrodes (the second metal layers) are flexible with regard to the first electrode (at positions spanning the cavities). However, it is also conceivable that the second electrodes are fixed in space and that the first electrode is flexible. In such configurations, when attached to a structure such as an aircraft fuselage, the second electrodes directly couple the counteracting noise components into the structure itself, thereby eliminating or damping the vibrations of the structure, instead of into the cabin. Further, the bottom electrode may also be divided into several sections, such as described with regard to the second electrodes. Therefore, any configuration of common electrode and divided electrodes with regard to bottom electrode(s) and second electrode(s) is conceivable and may be implemented.

The first metal layer may, for example, be on a first electrical potential such as a ground potential. For the sensor functionality, the corresponding second metal layers may be contacted to measure a voltage between the ground potential and the corresponding second metal layer over a bias voltage. When sound waves impinge on the corresponding second metal layer, the capacitance between the first metal layer and the corresponding second metal layer changes, which is reflected in the measured voltage. Therefore, by analyzing the measurement signals, the driver devices may extract a noise profile to be cancelled.

For the actuator functionality, the driver devices may apply a command signal in the form of a voltage signal to corresponding second metal layers. Because of the changing electrical field between the corresponding second metal layers and the first metal layer, the corresponding second metal layers start to vibrate, thereby emitting corresponding sound waves counteracting the measured sound waves.

Therefore, the first metal layer together with the corresponding (flexible) second metal layers spanned over the cavities either act as sensor (microphone) or as actuator (loudspeaker) in the same way as, for example, the CMUTs described above. In this way, the functionalities of the sensors and actuators may be integrated directly into the foil without the need for further devices, thereby further reducing costs.

Further, the driver devices of the driver arrangement may act as and thereby replace some of the spacers.

According to a further embodiment, each of the plurality of driver devices comprises an integrated single-chip microchip configured to analyze the measurement signals and to generate and output the control signals.

According to a further embodiment, the foil builds a mesh having cutouts.

**In** this embodiment, the foil has cutouts at regions where no functional components are needed. This design further reduces weight because no foil is present at regions where no devices (sensors, actuators, driver devices) and no conductive tracks are present.

According to a further embodiment, the foil is a flexible and/or stretchable foil.

By using such a flexible and/or stretchable foil, the foil and therefore the active noise control system may be easily adapted to the surrounding structure.

According to a second aspect, an aircraft is provided. The aircraft comprises a fuselage, a cabin, and an active noise control system according to any one of the embodiments described above.

According to an embodiment, the active noise control system is attached to an inner wall of the fuselage or to an interior panel within the cabin. The active noise control system is configured to detect noise within the cabin and to cancel the noise by generating noise components counteracting the detected noise.

The active noise control system may, for example, be attached to partition walls, ceiling panels, floor panels, overhead compartments, or any other structure within the cabin. Further, the active noise control system may be attached to the fuselage itself at the inside of the cabin. The active noise control system may also be hidden by paintings, cladding panels or other structures.

Further, the active noise control system may be connected to a control computer within the aircraft which may be used to control operation of the driver arrangement and therefore of the active noise control system. Instead of a control computer, a simple on/off switch or other device for controlling operation may be used.

In summary, the present disclosure provides a modular active noise control system, in particular for aircrafts, that is easily maintainable. Defect components may be easily replaced by replacing corresponding foil segments. Further, the integrated design utilizing a large amount of acoustic and/or vibration sensors and actuators allows for easy adjustment of the noise cancellation functionality to different environments. The design further reduces weight because large and heavy devices are not necessary. Further, the need for heavy harnesses is eliminated by the disclosed system.

Although the present disclosure is described with regard to aircraft applications, it should be noted, that the disclosure may be used for any suitable application, such as for automotive applications, train application, and similar applications where active noise cancellation is desired. For example, the disclosure could also be used to provide active noise cancelation within rooms of building by attaching the described active noise control system to the walls of the room.

### BRIEF DESCRIPTION OF THE DRAWINGS

In the following, exemplary embodiments are described in more detail having regard to the attached figures. The illustrations are schematic and not to scale. Identical reference signs refer to identical or similar elements. The figures show:
- **Fig. 1**: a highly schematic top view of an exemplary active noise control system.
- **Fig. 2**: a schematic view of an exemplary capacitive micromachined ultrasonic transducer (CMUT) in a reception or sensor mode.
- **Fig. 3**: a schematic view of an exemplary capacitive micromachined ultrasonic transducer (CMUT) in a transmission or actuator mode.
- **Fig. 4**: a schematic cut view of an exemplary layup of an active noise control system made up of a foil with integrated actuator and/or sensor regions.
- **Fig. 5**: a schematic view of an aircraft having an active noise control system.

### DETAILLED DESCRIPTION

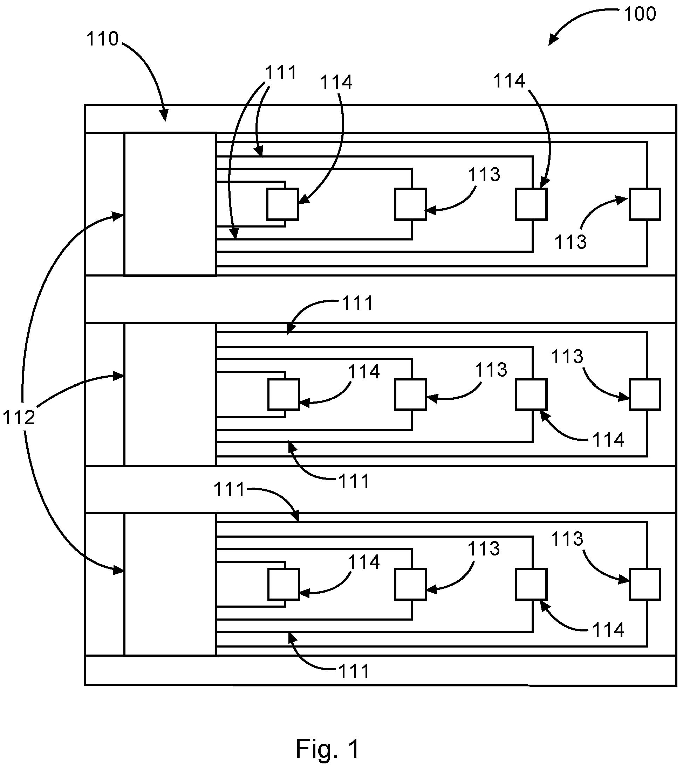

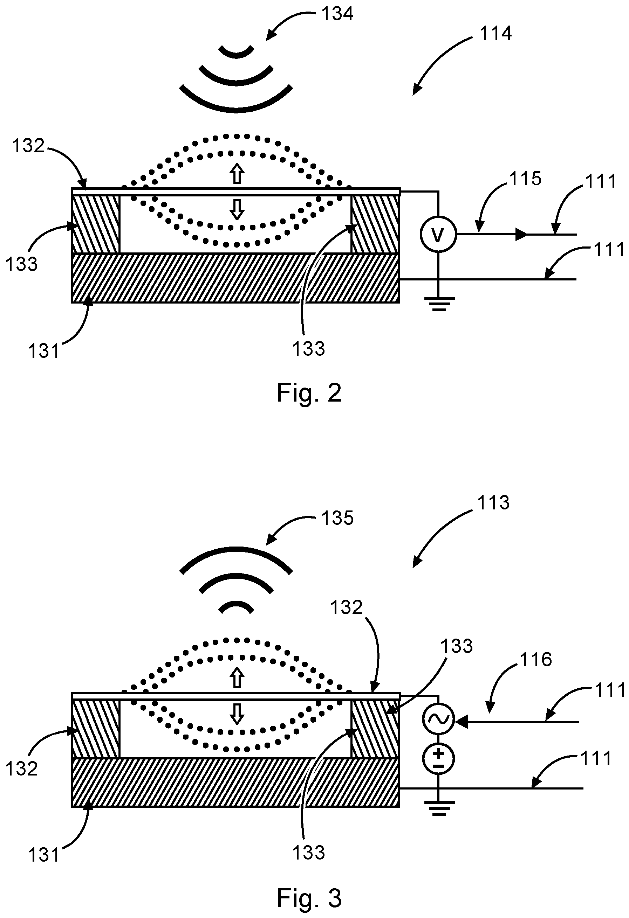

Fig. 1 highly schematically shows an active noise control system 100. The active noise control system comprises a foil 110, a plurality of conductive tracks 111, a plurality of actuators 113 (eight actuators 113 are shown), a plurality of sensors 114 (eight sensors 114 are shown) and a driver arrangement 112 made up of three driver devices 112 in the depicted configuration. The sensors 114, actuators 113 and driver devices 112 are grouped in three lines, each comprising one driver device 112 (the three driver devices 112 together building the driver arrangement 112), two sensors 114 and two actuators 113. Each of the sensors 114 and of the actuators 113 are connected to one driver device 112 by two conductive tracks 111. For example, one of these two conductive tracks 111 connecting a single sensor/actuator 114, 113 to a driver device 112 may be a ground potential. The other one of the two conductive tracks 111 may, for example, be utilized by the sensors 114 to send corresponding measurement signals 115 (see Fig. 2) to the respective driver device 112. In the case of the actuators 113, the second one of the corresponding two conductive tracks 111 may be used by the driver device 112 to send corresponding control signals 116 (see Fig. 3) to the respective actuator 113.

The conductive tracks 111 may be designed according to the specific requirements and may, for example, be constructed on the foil 110 by printing them onto the foil 110, as is known in the art.

Fig. 1 only schematically shows a section of the foil 110, which is indicated by the conductive tracks 111 which reach until the left and right end of the foil 110. In general, the foil 110 may be designed according to the specific requirement and in particular comprises a large amount of driver devices 112, sensors 114 and actuators 113.

The foil 110 may, in particular, be a flexible foil, so that it can be easily adjusted to a surrounding structure where it is to be attached to (such as an inner wall of an aircraft fuselage). The conductive tracks 111 build a circuit network between the sensors 114, the actuators 113 and the driver devices 112.

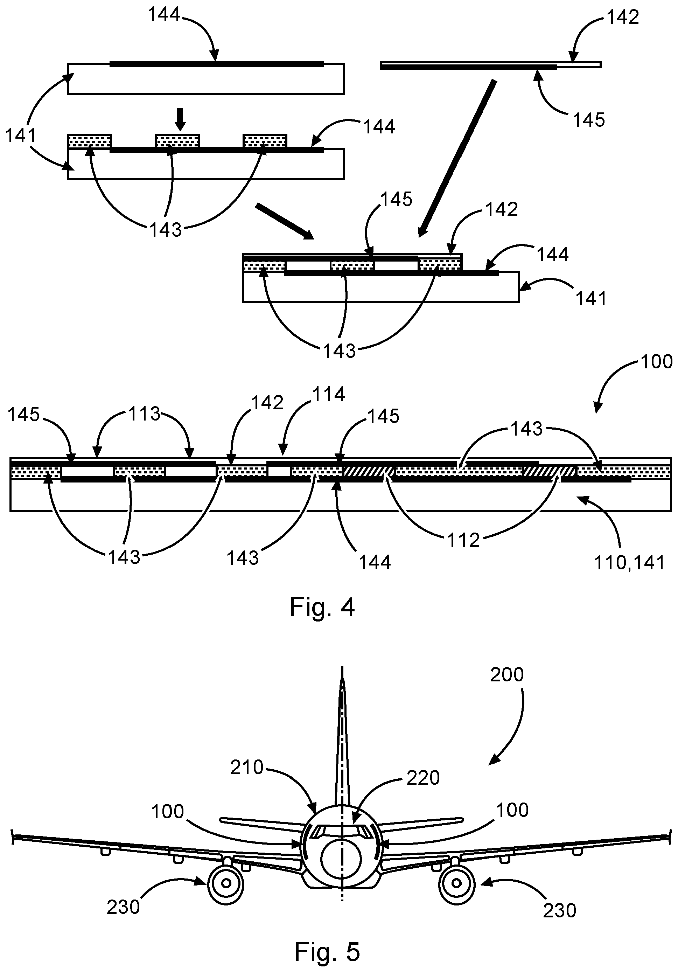

The sensors 114 may, for example, be MEMS-devices such as the CMUTs described above and below with regard to Fig. 2. However, the sensors 114 may also be any other sensor device suitable for detecting vibrations and/or acoustic waves. For example, the sensors 114 may also be piezo electric elements for detecting mechanical vibrations in the foil 110 which are propagated into the foil 110 from the structure onto which the foil is mounted. Further, the sensors may also be built by integrated structures of the foil 110 itself, such as the one described below with regard to Fig. 4.

The actuators 113 may, for example, be MEMS-devices such as the CMUTs described above and below with regard to Fig. 3. However, the actuators 113 may also be any other actuators device suitable for generating vibrations and/or acoustic waves. For example, the actuators 113 may also be piezo electric elements for generating mechanical vibrations in the foil 110 which are propagated from the foil 110 to the structure onto which the foil is mounted. Further, the actuators 113 may be built by integrated structures of the foil 110 itself, such as the one described below with regard to Fig. 4.

When vibrations are present within a structure onto which the foil 110 is mounted (for example a wall panel within an aircraft cabin), these vibrations generate acoustic waves which generate undesired noise. This noise may be actively eliminated either by coupling counter vibrations into the structure that destructively interfere with the original vibrations creating the noise, thereby damping the vibrations, and eliminating or at least damping the noise, or by generating acoustic waves that destructively interfere with the noise after it has been created by the vibrations. Therefore, in principle, acoustic sensor or vibrations sensors and/or acoustic actuators or vibration actuators may be used in the active noise control system 100. It should be appreciated that any combination of these devices may be used.

The sensors 114 generate corresponding measurement signals 115 and send these signals to the driver devices 112. The driver devices 112, in turn, analyze these measurement signals for undesired noise and generate corresponding control signals 116 for the actuators 113. These control signals 116 may, for example, be voltage signals for CMUTs, as described above and below with regard to Fig. 3. One driver device 112 may serve multiple sensors 114 and/or actuators 113. In particular, a single driver device 112 may server sensors/actuators 114, 113 close to the particular driver device 112. Further, the driver arrangement 112 (the entirety of the driver devices 112) may be connected to a central control computer or other device controlling operation of the driver arrangement 112 and therefore of the active noise control system 100.

Further, additionally or instead of measurement signals 115 of sensors integrated into the foil 110, measurement signals 115 of sensors 114 external to the foil 110 may be incorporated, such as of microphone devices arranged within the room to be noise controlled (e.g., an aircraft cabin). This may further increase accuracy of the noise cancellation.

By integrating a large amount of miniaturized sensors/actuators 114, 113, such as MEMS-devices (e.g., CMUTs) and miniaturized driver devices 112 into a foil 110, a highly redundant and flexible active noise control system may be built. In particular, having all the components integrated into the foil, heavy devices and harnesses may be avoided. Further, because of the large amount of devices, if only some of them fail, the system still keeps functional. Also, even if a critical amount of the integrated devices fails, maintenance time and cost is reduced because the corresponding foil segment can be easily replaced without having to rewire the structure. For this, a complete active noise control system 100 may be built from several foil segments which may be connected with each other by corresponding terminals (not shown).

Fig. 2 shows a schematic view of a capacitive micromachined ultrasonic transducer (CMUT) in a reception mode, i.e., used as one of the sensor 114 of the active noise control system 100 of Fig. 1. The CMUT 114 comprises a substrate or counter electrode 131 and a flexible membrane 132. At the circumference, the flexible membrane 132 is fixedly connected to the counter electrode 131 by a spacer structure 133. The flexible membrane 132 can oscillate with regard the substrate or counter electrode 131. The counter electrode 131 and the flexible membrane each comprise a metallized layer (not shown) which together build a capacitor. These capacitor electrodes are contacted, so that a voltage between the two electrodes may be measured. For example, the counter electrode 131 may be connected to a ground potential. The electrode built by the flexible membrane 132 may be connected to one of the driver devices 112 of the driver arrangement 112. When noise sound waves 134 impinge on the flexible membrane 132, the flexible membrane starts to oscillate. Therefore, the capacitance of the capacitor built by the counter electrode 131 and the flexible membrane 132, and with it the voltage between the two, changes according to the noise sound waves 134. The resulting measurement signal 115 is sent to one of the driver devices 112 via one of the conductive tracks 111, which analyzes this noise signal, as described above with regard to Fig. 1. The CMUT 114 may be integrated into foil 110 by means known in the art.

Fig. 3 shows a schematic view of a capacitive micromachined ultrasonic transducer (CMUT) in a transmission mode, i.e., used as one of the actuators 113 of the active noise control system of Fig. 1. The components of the CMUT 113 are the same as the components of the CMUT 114 of Fig. 2 and will not be repeated. However, in transmission mode, a bias voltage (DC voltage) is applied between the electrodes (counter electrode 131 and flexible membrane 132). When an additional AC voltage is applied between the electrodes, the forces between the electrodes changes according to the AC voltage, causing the flexible membrane 132 to vibrate according to the AC voltage, thereby emitting output sound waves 135. The applied AC voltage corresponds to the control signal 116 generated by one or more of the driver devices 112. Further, an operating point of the CMUT 113 can be adjusted by adjusting the DC voltage.

Fig. 4 shows an alternative active noise control system 100 having integrated actuators 113 and integrated sensors 114. The top part of Fig. 4 shows the construction of the active noise control system 100. First, a rigid bottom film 141 is provided and coated with a first metal layer 144. The term "rigid" means, that the rigid bottom film 141 is immobile with regard to the foil 110 itself. However, it does not necessarily mean, that the rigid bottom film 141 is a hard layer. In particular, the rigid bottom film 141 may be the foil 110 itself. After having provided the coated rigid bottom film 141, a plurality of spacers 143 is mounted onto the rigid bottom film 141 having a desired distance to each other, in order to build cavities when a flexible top film 142 is mounted on top of the spacers 143. The flexible top film 142 is coated with at least one second metal layer 145.

The bottom part of Fig. 4 shows a section of a finished active noise control system 100. The first metal layer 144 may, for example be connected to a common ground potential. The first metal layer 144 together with each of the at least one second metal layer 145 builds a capacitor. Since the flexible top film 142 together with each of the at least one second metal layer 145 is flexible with regard to the rigid bottom film 141, the flexible top film 142 builds a membrane above each of the cavities build between surrounding spacers 143 and the rigid bottom film 141. The flexible top film 142 can have different thicknesses at different locations to adjust for required mechanical properties such as stiffness. The first metal layer may for example be connected to a common ground potential of the driver arrangement 112 via one of the conductive tracks 111 described above with regard to Fig. 1. Each of the second metal layers 145 may be connected to a corresponding driver device 112 via another conductive track 111, depending on the designation as sensor 114 or as actuator 113.

Second metal layers 145 designated as sensors 114 vibrate in response to receiving sound waves in the same way as the membranes of the CMUTs described with regard to Fig. 2. Therefore, the capacitance with regard to the first metal layer changes in the same way. This change in capacitance is measured and the measurement signal 115 is received by the corresponding driver device 112. The driver device 112 analyzes the data and sends a control signal 116 to a second metal layer 145 designated as actuator 113. In response, this second metal layer 145 starts to vibrate in the same way as the membrane of the CMUT in Fig. 3 and creates corresponding sound waves cancelling out the noise sensed beforehand.

In Fig. 4, two cavities between a first second metal layer 145 (on the left of Fig. 4) are designated as actuators 114 (loudspeakers). One cavity further to the right of Fig. 4 is designated as sensor 114 (microphone). Further, the driver devices 112 are also placed between the rigid bottom film 141 and the flexible top film 142 in the same way as the spacers 143. In Fig. 4, two driver devices 112 are shown. However, it should be appreciated, that any desirable number of sensors 114, actuators 113 and driver devices 112 may be used.

Fig. 5 schematically shows an aircraft 200. The aircraft comprises a fuselage 210, turbines 230 and a cabin 220 enclosed by the fuselage 210. Active noise control system 100, such as the active noise control systems 100 of Figs. 1 or 4, are attached to left and right inner walls of the fuselage 210. In particular, the foils 110 of the active noise control systems 100 are attached to the side walls, such that the foils 110 itself are fixedly connected to the respective inner walls of the fuselage 210 and the actuators 113 and sensors 114 (in this case, acoustic sensors 114 and acoustic actuators 113, such as MEMS-devices likes CMUTs or the corresponding functionalities integrated into the foil 110 itself (embodiment of Fig. 4)) are directed towards the cabin 220 and away from the respective wall to which the respective foil 110 is attached. The sensors 114 therefore measure noise within the cabin 220 and the actuators 113 can create sound waves that propagate within the cabin 220.

The noise control system 100 therefore may be used according to the principles described above to cancel or damp undesired noise within the cabin 220, such as noise created by the turbines 230 or by drag forces acting on the fuselage 210 which lead to vibrations of the fuselage 210 and therefore to noise within the cabin 220. The active noise control system of systems 100 may be designed according to any one of the embodiments described herein.

Although shown as being attached to side walls of the aircraft 200, the active noise control systems 100 may also be attached to other components of the aircraft, such as interior panels (floor panes, ceiling panels, partition walls, etc. (not shown in Fig. 5)).

It should be noted that "comprising" or "including" does not exclude other elements or steps, and "one" or "a" does not exclude a plurality. It should further be noted that features or steps that have been described with reference to any of the above embodiments may also be used in combination with other features or steps of other embodiments described above. Reference signs in the claims are not to be regarded as limitation.

### LIST OF REFERENCE SIGNS

- 100: active noise control system
- 110: foil
- 111: conductive tracks
- 112: driver devices, driver arrangement
- 113: actuators, CMUT
- 114: sensors, CMUT
- 115: measurement signals
- 116: control signals
- 120: micro electro-mechanical system device (MEMS-device)
- 130: capacitive micromachined ultrasonic transducer (CMUT)
- 131: substrate, counter electrode
- 132: flexible membrane
- 133: spacer structure
- 134: noise sound waves
- 135: output sound waves
- 141: rigid bottom film
- 142: flexible top film
- 143: spacers
- 144: first metal layer
- 145: second metal layer

- 200: aircraft
- 210: fuselage
- 220: cabin
- 230: turbines

## Claims

1. Active noise control system (100), comprising:
a foil (110), configured to be mounted to an interior panel of an aircraft (200);
wherein the foil (110) comprises:
a plurality of conductive tracks (111);
a driver arrangement (112);
a plurality of actuators (113); and
a plurality of sensors (114);
wherein each of the plurality of actuators (113) is connected to the driver arrangement (112) via at least one of the plurality of conductive tracks (111);
wherein each of the plurality of sensors (114) is connected to the driver arrangement (112) via at least one of the plurality of conductive tracks (111);
wherein each of the sensors (114) is configured to sense vibrations and/or acoustic sounds and to send measurement signals (115) to the driver arrangement (112);
wherein the driver arrangement (112) is configured to analyze the measurement signals (115) and to generate and send control signals (116) to the actuators (113) so that the actuators generate vibrations and/or acoustic sounds that counteract the vibrations and/or acoustic sounds sensed by the sensors (114);
wherein the driver arrangement (112) comprises a plurality of driver devices (112);
wherein the plurality of driver devices (112) are distributed over the foil (110); and
wherein each of the driver devices (112) is responsible for a defined subset of the plurality of sensors (114) and of the plurality of actuators (113) close to the corresponding driver device (112).

2. The active noise control system (100) of claim 1, wherein at least one of the plurality of actuators and/or at least one of the plurality of sensors is a micro electro-mechanical system device (120), MEMS-device (120).

3. The active noise control system (100) of claim 1 or 2, wherein at least one of the plurality of actuators and/or at least one of the plurality of sensors is a capacitive micromachined ultrasonic transducer (130), CMUT (130).

4. The active noise control system (100) of any one of the preceding claims, wherein at least one of the plurality of actuators (113) is a loudspeaker.

5. The active noise control system (100) of any one of the preceding claims, wherein at least one of the plurality of sensors (114) is a microphone.

6. The active noise control system (100) of any one of the preceding claims, wherein at least one of the plurality of actuators (113) and/or at least one of the plurality of sensors (114) is a piezo electric element.

7. The active noise control system (100) of claim 6, wherein the piezo electric element is made from an inorganic compound comprising lead zirconate titanate.

8. The active noise control system (100) of any one of the preceding claims, wherein at least one of the plurality of actuators (113) and/or at least one of the plurality of sensors (114) is formed by a rigid bottom film (141) having a first metal layer (144) and a top film (142) having at least one second metal layer (145);
wherein the bottom film (141) is arranged directly on the foil (110);
wherein the top film (142) is spaced apart from the bottom film (141) by a plurality of spacers (143);
wherein the top film (142) is designed to vibrate and thereby generate the vibrations and/or acoustic sounds;
wherein each of the at least one second metal layer (145) together with the first metal layer (144) builds a capacitor.

9. The active noise control system (100) of any one of the preceding claims, wherein each of the plurality of driver devices (112) comprises an integrated single-chip microchip configured to analyze the measurement signals (115) and to generate and output the control signals (116).

10. The active noise control system (100) of any one of the preceding claims, wherein the foil (110) builds a mesh having cutouts.

11. The active noise control system (100) of any one of the preceding claims, wherein the foil (110) is a flexible and/or stretchable foil.

12. Aircraft (200), comprising:
a fuselage (210);
a cabin (220); and
an active noise control system (100) according to any one of the preceding claims.

13. The aircraft (200) of claim 12,
wherein the active noise control system (100) is attached to an inner wall of the fuselage (210) or to an interior panel within the cabin (220);
wherein the active noise control system (100) is configured to detect noise within the cabin (220) and to cancel the noise by generating noise components counteracting the detected noise.

## Patentansprüche

1. Aktives Geräuschunterdrückungssystem (100), umfassend:
eine Folie (110), die konfiguriert ist, um an einer Innenverkleidung eines Flugzeugs (200) montiert zu werden;
wobei die Folie (110) Folgendes umfasst:
eine Vielzahl von Leiterbahnen (111);
eine Treiberanordnung (112);
eine Vielzahl von Aktuatoren (113); und
eine Vielzahl von Sensoren (114);
wobei jeder der Vielzahl von Aktuatoren (113) über mindestens eine der Vielzahl von Leiterbahnen (111) mit der Treiberanordnung (112) verbunden ist;
wobei jeder der Vielzahl von Sensoren (114) über mindestens eine der Vielzahl von Leiterbahnen (111) mit der Treiberanordnung (112) verbunden ist;
wobei jeder der Sensoren (114) konfiguriert ist, Vibrationen und/oder akustische Geräusche zu erfassen und Messsignale (115) an die Treiberanordnung (112) zu senden;
wobei die Treiberanordnung (112) konfiguriert ist, die Messsignale (115) zu analysieren und Steuersignale (116) zu erzeugen und an die Aktuatoren (113) zu senden, so dass die Aktuatoren Vibrationen und/oder akustische Geräusche erzeugen, die den von den Sensoren (114) erfassten Vibrationen und/oder akustischen Geräuschen entgegenwirken;
wobei die Treiberanordnung (112) eine Vielzahl von Treibervorrichtungen (112) umfasst;
wobei die Vielzahl von Treibervorrichtungen (112) über die Folie (110) verteilt ist; und
wobei jede der Treibervorrichtungen (112) für eine definierte Teilmenge der Vielzahl von Sensoren (114) und der Vielzahl von Aktuatoren (113) in der Nähe der entsprechenden Treibervorrichtung (112) verantwortlich ist.

2. Aktives Geräuschunterdrückungssystem (100) nach Anspruch 1, wobei mindestens einer der Vielzahl von Aktuatoren und/oder mindestens einer der Vielzahl von Sensoren eine mikroelektromechanische Systemvorrichtung (120), MEMS-Vorrichtung (120), ist.

3. Aktives Geräuschunterdrückungssystem (100) nach Anspruch 1 oder 2, wobei mindestens einer der Vielzahl von Aktuatoren und/oder mindestens einer der Vielzahl von Sensoren ein kapazitiver mikromechanisch gefertigter Ultraschallwandler (130), CMUT (130), ist.

4. Aktives Geräuschunterdrückungssystem (100) nach einem der vorhergehenden Ansprüche, wobei mindestens einer der Vielzahl von Aktuatoren (113) ein Lautsprecher ist.

5. Aktives Geräuschunterdrückungssystem (100) nach einem der vorhergehenden Ansprüche, wobei mindestens einer der Vielzahl von Sensoren (114) ein Mikrofon ist.

6. Aktives Geräuschunterdrückungssystem (100) nach einem der vorhergehenden Ansprüche, wobei mindestens einer der Vielzahl von Aktuatoren (113) und/oder mindestens einer der Vielzahl von Sensoren (114) ein piezoelektrisches Element ist.

7. Aktives Geräuschunterdrückungssystem (100) nach Anspruch 6, wobei das piezoelektrische Element aus einer anorganischen Verbindung hergestellt ist, die Blei-Zirkonat-Titanat umfasst.

8. Aktives Geräuschunterdrückungssystem (100) nach einem der vorhergehenden Ansprüche, wobei mindestens einer der Vielzahl von Aktuatoren (113) und/oder mindestens einer der Vielzahl von Sensoren (114) durch eine starre untere Folie (141) mit einer ersten Metallschicht (144) und eine obere Folie (142) mit mindestens einer zweiten Metallschicht (145) gebildet ist;
wobei die untere Folie (141) direkt auf der Folie (110) angeordnet ist;
wobei die obere Folie (142) von der unteren Folie (141) durch eine Vielzahl von Abstandshaltern (143) beabstandet ist;
wobei die obere Folie (142) ausgestaltet ist, zu vibrieren und dadurch die Vibrationen und/oder akustischen Geräusche zu erzeugen;
wobei jede der mindestens einen zweiten Metallschicht (145) zusammen mit der ersten Metallschicht (144) einen Kondensator bildet.

9. Aktives Geräuschunterdrückungssystem (100) nach einem der vorhergehenden Ansprüche, wobei jede der Vielzahl von Treibervorrichtungen (112) einen integrierten Einzelchip-Mikrochip umfasst, der konfiguriert ist, die Messsignale (115) zu analysieren und die Steuersignale (116) zu erzeugen und auszugeben.

10. Aktives Geräuschunterdrückungssystem (100) nach einem der vorhergehenden Ansprüche, wobei die Folie (110) ein Gitter mit Ausschnitten bildet.

11. Aktives Geräuschunterdrückungssystem (100) nach einem der vorhergehenden Ansprüche, wobei die Folie (110) eine flexible und/oder dehnbare Folie ist.

12. Flugzeug (200), umfassend:
einen Rumpf (210);
eine Kabine (220); und
ein aktives Geräuschunterdrückungssystem (100) nach einem der vorhergehenden Ansprüche.

13. Flugzeug (200) nach Anspruch 12,
wobei das aktive Geräuschunterdrückungssystem (100) an einer Innenwand des Rumpfs (210) oder an einer Innenverkleidung innerhalb der Kabine (220) angebracht ist;
wobei das aktive Geräuschunterdrückungssystem (100) konfiguriert ist, Geräusche innerhalb der Kabine (220) zu erfassen und die Geräusche durch Erzeugen von Geräuschkomponenten, die den erfassten Geräuschen entgegenwirken, auszublenden.

## Revendications

1. Système de contrôle actif du bruit (100), comprenant:
une feuille (110), configurée pour être montée sur un panneau intérieur d'un aéronef (200);
dans lequel la feuille (110) comprend:
une pluralité de pistes conductrices (111);
un dispositif de commande (112);
une pluralité d'actionneurs (113); et
une pluralité de capteurs (114);
dans lequel chacun de la pluralité d'actionneurs (113) est connecté au dispositif de commande (112) via au moins l'une de la pluralité de pistes conductrices (111);
dans lequel chacun de la pluralité de capteurs (114) est connecté au dispositif de commande (112) via au moins l'une de la pluralité de pistes conductrices (111);
dans lequel chacun des capteurs (114) est configuré pour détecter des vibrations et/ou des sons acoustiques et pour envoyer des signaux de mesure (115) au dispositif de commande (112);
dans lequel le dispositif de commande (112) est configuré pour analyser les signaux de mesure (115) et pour générer et envoyer des signaux de commande (116) aux actionneurs (113) de sorte que les actionneurs génèrent des vibrations et/ou des sons acoustiques qui neutralisent les vibrations et/ou les sons acoustiques détectés par les capteurs (114);
dans lequel le dispositif de commande (112) comprend une pluralité de dispositifs d'entraînement (112);
dans lequel la pluralité de dispositifs d'entraînement (112) sont répartis sur la feuille (110); et
dans lequel chacun des dispositifs d'entraînement (112) est responsable d'un sous-ensemble défini de la pluralité de capteurs (114) et de la pluralité d'actionneurs (113) à proximité du dispositif d'entraînement (112) correspondant.

2. Système de contrôle actif du bruit (100) selon la revendication 1, dans lequel au moins l'un de la pluralité d'actionneurs et/ou au moins l'un de la pluralité de capteurs est un dispositif de système micro-électromécanique (120), un dispositif MEMS (120).

3. Système de contrôle actif du bruit (100) selon la revendication 1 ou 2, dans lequel au moins l'un de la pluralité d'actionneurs et/ou au moins l'un de la pluralité de capteurs est un transducteur ultrasonore micro-usiné capacitif (130), CMUT (130).

4. Système de contrôle actif du bruit (100) selon l'une quelconque des revendications précédentes, dans lequel au moins l'un de la pluralité d'actionneurs (113) est un haut-parleur.

5. Système de contrôle actif du bruit (100) selon l'une quelconque des revendications précédentes, dans lequel au moins l'un de la pluralité de capteurs (114) est un microphone.

6. Système de contrôle actif du bruit (100) selon l'une quelconque des revendications précédentes, dans lequel au moins l'un de la pluralité d'actionneurs (113) et/ou au moins l'un de la pluralité de capteurs (114) est un élément piézoélectrique.

7. Système de contrôle actif du bruit (100) selon la revendication 6, dans lequel l'élément piézoélectrique est constitué d'un composé inorganique comprenant du zirconate titanate de plomb.

8. Système de contrôle actif du bruit (100) selon l'une quelconque des revendications précédentes, dans lequel au moins l'un de la pluralité d'actionneurs (113) et/ou au moins l'un de la pluralité de capteurs (114) est formé par un film inférieur rigide (141) ayant une première couche métallique (144) et un film supérieur (142) ayant au moins une seconde couche métallique (145);
dans lequel le film inférieur (141) est agencé directement sur la feuille (110);
dans lequel le film supérieur (142) est espacé du film inférieur (141) par une pluralité d'entretoises (143);
dans lequel le film supérieur (142) est conçu pour vibrer et générer ainsi les vibrations et/ou les sons acoustiques;
dans lequel chacune de l'au moins une seconde couche métallique (145) conjointement avec la première couche métallique (144) construit un condensateur.

9. Système de contrôle actif du bruit (100) selon l'une quelconque des revendications précédentes, dans lequel chacun de la pluralité de dispositifs d'entraînement (112) comprend une micropuce à puce unique intégrée configurée pour analyser les signaux de mesure (115) et pour générer et délivrer les signaux de commande (116).

10. Système de contrôle actif du bruit (100) selon l'une quelconque des revendications précédentes, dans lequel la feuille (110) construit un maillage ayant des découpes.

11. Système de contrôle actif du bruit (100) selon l'une quelconque des revendications précédentes, dans lequel la feuille (110) est une feuille flexible et/ou étirable.

12. Aéronef (200), comprenant:
un fuselage (210);
une cabine (220); et
un système de contrôle actif du bruit (100) selon l'une quelconque des revendications précédentes.

13. Aéronef (200) selon la revendication 12,
dans lequel le système de contrôle actif du bruit (100) est fixé à une paroi intérieure du fuselage (210) ou à un panneau intérieur à l'intérieur de la cabine (220);
dans lequel le système de contrôle actif du bruit (100) est configuré pour détecter le bruit à l'intérieur de la cabine (220) et pour annuler le bruit en générant des composantes de bruit neutralisant le bruit détecté.
